# EUROPÄISCHE PATENTANMELDUNG

(11) **EP 4 102 206 A2**
(43) Veröffentlichungstag der Anmeldung: **14.12.2022**
(21) Anmeldenummer: 22176690.0
(22) Anmeldetag: 01.06.2022
(51) Int. Cl.: G01M 13/04

(54) **VERFAHREN UND VORRICHTUNG ZUR ABSCHÄTZUNG DER LEBENSDAUER EINES TRIBOLOGISCH BEANSPRUCHTEN BAUTEILS UND COMPUTERPROGRAMMPRODUKT**

(30) Priorität: 10.06.2021 DE 102021205838
(71) Anmelder: Robert Bosch GmbH, 70442 Stuttgart (DE)
(72) Erfinder: Elter, Alexander, 68723 Oftersheim (DE)

(57) **Zusammenfassung**

Die Erfindung betrifft ein Verfahren zur Abschätzung der Lebensdauer (T_{L}) eines tribologisch beanspruchten Bauteils (20), umfassend zwei aufeinanderfolgende Phasen (I, II; A, B), eine erste Phase (I; A), bei der beim Betrieb eines das Bauteil (20) aufweisenden Aggregats (10) wenigstens ein, vorzugsweise mehrere erste Parameter (P₂₂, P₂₄) des Bauteils (20) und/oder des Aggregats (10) zur Ermittlung eines Funktionszustands (FZ) des Bauteils (20) kontinuierlich oder in diskreten Zeitabständen erfasst wird, wobei beim Überschreiten eines ersten Grenzwerts (GW₁) des Funktionszustands (FZ) auf einen nicht ordnungsgemäßen Zustand des Bauteils (20) geschlossen wird, wobei der Funktionszustand (FZ) auf Grundlage einer statistischen Auswertung des wenigstens einen ersten Parameters (P₂₂, P₂₄) ermittelt wird, wobei ab dem Erreichen des ersten Grenzwerts (GW₁) die erste Phase (I; A) abgeschlossen und in die zweite Phase (II; B) übergeleitet wird.

## Beschreibung

### Technisches Gebiet

Die Erfindung betrifft ein Verfahren und eine Vorrichtung zur Abschätzung der Lebensdauer eines tribologisch beanspruchten Bauteils, das beispielsweise als Bestandteil in einem Fahrzeug o.ä. Anwendungen dient. Insbesondere soll das Verfahren dazu dienen, einen Zustand des Bauteils zu klassifizieren und einen möglichen Ausfall des tribologisch beanspruchten Bauteils zuverlässig vorherzusagen, um beispielsweise einen rechtzeitigen Austausch bzw. eine Reparatur des Bauteils zu ermöglichen. Ferner betrifft die Erfindung ein Computerprogrammprodukt zum Durchführen des erfindungsgemäßen Verfahrens.

### Stand der Technik

Aus der DE 197 24 308 A1 ist es bekannt, bei einem ein tribologisch darstellendes Bauteil in Form einer Gleitringdichtung dessen Betriebsparameter zu erfassen und die erfassten Messwerte mit bekannten Vergleichsmesswerten zu vergleichen. Dadurch kann bei einer Abweichung der gemessenen Ist-Werte von den bekannten Vergleichswerten die Ausfallwahrscheinlichkeit und/oder die verbleibende Restlebensdauer berechnet werden.

Aus der DE 10 2017 106 919 A1 ist darüber hinaus ein Verfahren bekannt, bei dem aus einem berechneten Schädigungsmaß und einer Schädigungsmaßunsicherheit eine Ausfallwahrscheinlichkeit für zukünftige Zeitpunkte des Bauteils bestimmt werden kann.

### Offenbarung der Erfindung

Das erfindungsgemäße Verfahren zur Abschätzung der Lebensdauer eines tribologisch beanspruchten Bauteils mit den Merkmalen des Anspruchs 1 hat den Vorteil, dass es eine relativ lange Nutzung des Bauteils ermöglicht, da es mit hoher Wahrscheinlichkeit eine Abschätzung der Lebensdauer des Bauteils ermöglicht. Insbesondere ermöglicht es das erfindungsgemäße Verfahren, dass das Bauteil bei schonender Nutzung und/oder bei idealen Fertigungstoleranzen eine besonders hohe Betriebsdauer aufweisen kann, bevor es ausgetauscht bzw. repariert werden muss.

Der Erfindung liegt die Idee zugrunde, die Lebensdauer des Bauteils während der Betriebsdauer des Bauteils über einen 2-phasigen Prozess zu ermitteln, wobei die beiden Phasen zeitlich aufeinanderfolgend ablaufen. Während in der ersten Phase mittels statistischer Methoden wenigstens ein erster Parameter ausgewertet wird, um auf einen generellen Zustand des Bauteils mit Blick auf dessen Funktionalität zu schließen, wird in der zweiten Phase auf wenigstens einen zweiten Parameter ein physikalisches Modell angewendet. Das physikalische Modell dient der Berechnung des Erreichens eines Zeitpunkts, zu dem das Bauteil einen (zweiten) Grenzwert erreicht hat, bei dem das Bauteil defekt ist bzw. seine (maximale) Lebensdauer erreicht haben wird.

Weiterhin eignet sich das vorgeschlagene Verfahren insbesondere im Rahmen von KI-Anwendungen bei komplexen Maschinen bzw. Aggregaten. Hierbei ist beispielsweise an eine prädiktive Diagnose bei Produkten aus dem Consumerbereich oder aus der Automobiltechnik gedacht, um den Zeitpunkt eines erforderlichen Services zu optimieren. Weiterhin ermöglicht das erfindungsgemäße Verfahren einen vielfältigen Einsatz in unterschiedlichsten Bereichen, um beispielsweise eine Produktverfügbarkeit bei Flottenbetrieben von Fahrzeugen, in der Industrie o.ä. Anwendungen, sicher zu gewährleisten.

Vor dem Hintergrund der obigen Erläuterungen ist es daher bei dem erfindungsgemäßen Verfahren zur Abschätzung der Lebensdauer eines tribologisch beanspruchten Bauteils vorgesehen, dass das Verfahren zwei aufeinanderfolgende Phasen umfasst, eine erste Phase, bei der beim Betrieb eines das Bauteil aufweisenden Aggregats wenigstens ein, vorzugsweise mehrere erste Parameter des Bauteils und/oder des Aggregats zur Ermittlung eines Funktionszustands des Bauteils kontinuierlich oder in diskreten Zeitabständen erfasst wird, wobei beim Überschreiten eines ersten Grenzwerts des Funktionszustands auf einen nicht ordnungsgemäßen Zustand des Bauteils geschlossen wird, wobei der Funktionszustand auf Grundlage einer statistischen Auswertung oder einer Methode der künstlichen Intelligenz bzw. des maschinellen Lernens des wenigstens einen ersten Parameters ermittelt wird, wobei ab dem Erreichen des ersten Grenzwerts die erste Phase abgeschlossen und in die zweite Phase übergeleitet wird, in der wenigstens ein zweiter Parameter des Bauteils und/oder des Aggregats kontinuierlich oder in diskreten Zeitabständen erfasst wird, wobei der wenigstens eine zweite Parameter anhand eines physikalischen Modells hinsichtlich eines zweiten Grenzwerts ausgewertet wird, und wobei beim Erreichen des zweiten Grenzwerts auf das Ende der Lebensdauer des Bauteils geschlossen wird.

Vorteilhafte Weiterbildungen des erfindungsgemäßen Verfahrens zur Abschätzung der Lebensdauer eines tribologisch beanspruchten Bauteils sind in den Unteransprüchen aufgeführt.

Besonders bevorzugt ist es, wenn die Nutzungsdauer des Bauteils so lange wie möglich ist, ohne dass von einem Ausfall des Bauteils auszugehen ist. Hierzu wird das soweit beschriebene Verfahren dahingehend modifiziert und ergänzt, dass zur Berechnung einer Nutzungsdauer des Bauteils die Zeitpunkte des Erreichens des zweiten Grenzwerts statistisch ausgewertet werden und die Nutzungsdauer vorzugsweise derart gewählt wird, dass die Häufigkeit der Zeitpunkte des Erreichens des zweiten Grenzwerts unter einem vorgegebenen Wert liegen.

Besonders bevorzugt ist es, wenn während der ersten Phase des Verfahrens mehrere erste Parameter ausgewertet werden, und wenn die mehreren ersten Parameter aufgrund unterschiedlicher Relevanz gegebenenfalls statistisch unterschiedlich zueinander gewichtet werden. Ein derartiges Verfahren ermöglicht eine optimierte Erfassung des augenblicklichen Betriebszustands des Bauteils.

Auch kann es vorgesehen sein, dass die Ergebnisse des Funktionszustands während der ersten Phase mittels statistischer Methoden bewertet werden.

Weiterhin kann es zur Optimierung der Erfassung des Ist-Zustands des Bauteils während der ersten Phase vorgesehen sein, dass zusätzlich zum nicht ordnungsgemäßen Zustand des Bauteils während der ersten Phase ein Zustand generiert wird, der zwischen dem nicht ordnungsgemäßen Zustand des Bauteils und dem ordnungsgemäßen Zustand des Bauteils liegt.

Hinsichtlich der zweiten Phase ist es besonders bevorzugt, dass der wenigstens eine zweite Parameter zumindest mittelbar eine Beanspruchung des Bauteils und der zweite Grenzwert ein Maß für eine mögliche Beanspruchbarkeit des Bauteils repräsentiert.

In Weiterbildung des zuletzt gemachten Vorschlags ist es bevorzugt vorgesehen, dass der wenigstens eine zweite Parameter und der zweite Grenzwert in einen Bezug zueinander gebracht werden, derart, dass von einem Wert des wenigstens einen zweiten Parameters auf einen Wert in Bezug auf den zweiten Grenzwert geschlossen wird. Somit ist trotz der Verwendung eines Messwerts, der sich physikalisch von dem zweiten Grenzwert unterscheidet, eine Anwendbarkeit bzw. ein Vergleich mit dem zweiten Grenzwert möglich.

Besonders bevorzugt ist es darüber hinaus, dass vor dem Erreichen einer prognostizierten Lebensdauer, insbesondere vor dem Erreichen der maximalen Nutzungsdauer des Bauteils, ein Signal, eine Mitteilung o.ä. generiert wird, um einen Hinweis auf einen Austausch und/oder eine Reparatur des Bauteils zu erzeugen.

Insbesondere in Verbindung mit komplexen Anwendungen bzw. Kl-Anwendungen kann es vorgesehen sein, dass das Verfahren als selbstlernendes Verfahren durchgeführt wird. Auch dies bewirkt eine Optimierung der Erfassung bzw. Abschätzung der Lebensdauer bzw. der Nutzungsdauer des Bauteils.

Weiterhin umfasst die Erfindung auch eine Vorrichtung zum Durchführen eines soweit beschriebenen erfindungsgemäßen Verfahrens, umfassend ein Aggregat mit einem tribologisch beanspruchten Bauteil, einer Sensorik zur Erfassung des wenigstens einen ersten und des wenigstens einen zweiten Parameters, und einer einen Algorithmus aufweisenden Auswerteeinrichtung zum Durchführen des Verfahrens.

Zuletzt umfasst die Erfindung ein Computerprogrammprodukt, insbesondere einen Datenträger oder ein Datenprogramm, mit einem Algorithmus, der dazu ausgebildet ist, wenigstens einen Schritt eines erfindungsgemäßen Verfahrens auszuführen oder das als Bestandteil einer entsprechenden Vorrichtung dient.

Weitere Vorteile, Merkmale und Einzelheiten der Erfindung ergeben sich aus der nachfolgenden Beschreibung bevorzugter Ausführungsführungsformen der Erfindung sowie anhand der Zeichnungen.

### Kurze Beschreibung der Zeichnungen

- Fig. 1: zeigt in schematischer Darstellung eine Vorrichtung mit einem Aggregat und einem tribologisch beanspruchten Bauteil,
- Fig. 2: ein Diagramm zur Erläuterung eines grundsätzlichen zeitlichen Schadensverlaufs des tribologisch beanspruchten Bauteils und
- Fig. 3 bis Fig. 6: Ablaufdiagramme zur Erläuterung des Verfahrens zur Abschätzung der Lebensdauer und der Nutzungsdauer des tribologisch beanspruchten Bauteils.

### Ausführungsformen der Erfindung

Gleiche Elemente bzw. Elemente mit gleicher Funktion sind in den Figuren mit den gleichen Bezugsziffern versehen.

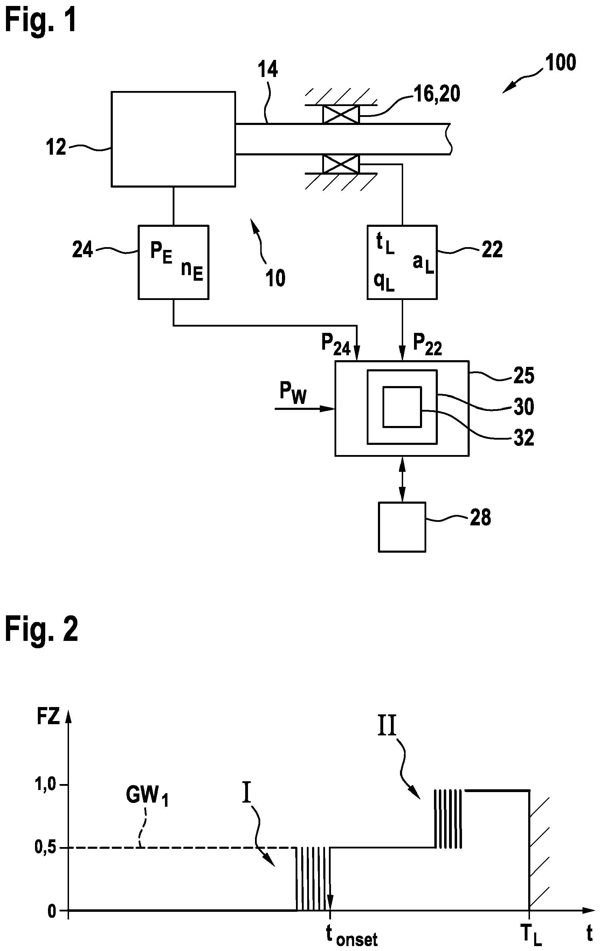

In der Fig. 1 ist eine Vorrichtung 100 schematisch dargestellt, die beispielsweise Teil eines Kraftfahrzeugs o.ä. sein kann. Die Vorrichtung 100 umfasst ein Aggregat 10, das einen Teil eines Antriebsstrangs des Kraftfahrzeugs darstellt und einen Elektromotor 12 aufweist, der über eine Abtriebswelle 14 ein nicht dargestelltes Element, z.B. ein Rad, antreibt. Die Abtriebswelle 14 ist beispielhaft in einem Lager 16 drehbar gelagert, das ein tribologisch beanspruchtes Bauteil 20 darstellt. Das Lager 16 bzw. das Bauteil 20 ist mittels einer ersten Sensorik 22 überwacht. Beispielsweise dient die erste Sensorik 22 zur Erfassung einer Lagertemperatur t_{L} eines Leckölverlusts q_{L}, der Erfassung von Beschleunigungen a_{L} des Lagers 16 quer zur Längsrichtung der Abtriebswelle 14 sowie gegebenenfalls anderer Parameter. Weiterhin ist auch der Elektromotor 12 mittels einer zweiten Sensorik 24 überwacht. Beispielsweise werden mittels der zweiten Sensorik 24 die Leistungsaufnahme p_{E}, die Drehzahl n_{E} und gegebenenfalls weitere Parameter des Elektromotors 12 erfasst.

Die von den beiden Sensoriken 22, 24 erfassten Messwerte der Parameter werden als erste Parameter P₂₂ bzw. P₂₄ bezeichnet, die entweder kontinuierlich oder aber in diskreten Zeitabständen erfasst und einer Steuereinrichtung 25 als Eingangsgröße zugeführt werden. Auch können der Steuereinrichtung 25 weitere Parameter Pw als Eingangsgrößen zugeführt werden, beispielsweise ein Lastwunsch eines Fahrers o.ä. weitere Parameter.

Über eine Schnittstelle 28 ist eine bidirektionale Kommunikation der Steuereinrichtung 25 möglich, beispielsweise zur Ausgabe von Meldungen, Warnsignalen o.ä. Ereignissen. Auch können über die Schnittstelle 28 der Steuereinrichtung 25 Daten zugeführt werden, die sich beispielsweise aus dem Betrieb anderer gleichartiger Vorrichtungen 100 ergeben, um eine nachfolgend noch näher erläuterte Auswertung zur Abschätzung der Lebensdauer T_{L} des Lagers 16 bzw. des Bauteils 20 zu beeinflussen.

Die Steuereinrichtung 25 umfasst u.a. eine Auswerteeinrichtung 30 mit einem Algorithmus 32. Die Auswerteeinrichtung 30 ist entweder ein Bestandteil der Steuereinrichtung 25 oder aber über eine geeignete drahtlose Datenverbindung mit der Steuereinrichtung 25 verbunden und einem beliebigen Ort lokalisiert.

Der Algorithmus 32 kann insbesondere als Datenprogramm oder als Datenträger ausgebildet bzw. vorgesehen sein und dient u.a. dazu, die Lebensdauer T_{L} sowie eine Nutzungsdauer T_{N} des Lagers 16 bzw. des Bauteils 20 zu berechnen, um vor Erreichen des Zeitpunkts der Lebensdauer T_{L} bzw. der Nutzungsdauer T_{N} beispielsweise über die Schnittstelle 28 ein entsprechendes Signal oder einen entsprechenden Warnhinweis auszugeben, damit das Lager 16 bzw. das Bauteil 20 ausgetauscht oder repariert werden kann, und dadurch beispielsweise ein Ausfall des Lagers 16 bzw. des Bauteils 20 und somit auch beispielhaft eines Fahrzeugs während des laufenden Betriebs zu vermeiden.

Die Lebensdauer T_{L} sowie die Nutzungsdauer T_{N} des Bauteils 20 wird beispielsweise von der Höhe und Dauer der Belastung des Bauteils 20, gegebenenfalls in das Bauteil 20 gelangende Fremdkörper o.ä. Einflüsse beeinflusst bzw. limitiert.

In der Fig. 2 ist in schematischer Darstellung über der Betriebsdauer t des Bauteils 20 ein Funktionszustand FZ des Bauteils 20 dargestellt. Der Funktionszustand FZ umfasst dabei beispielhaft drei Werte 0, 0,5 und 1,0. Der Wert 0 kennzeichnet einen Funktionszustand FZ des Bauteils 20, bei dem das Bauteil 20 keinerlei funktionsbeeinträchtigenden Schaden aufweist. Der Funktionszustand FZ mit dem Wert 0,5 kennzeichnet demgegenüber einen Funktionszustand FZ des Bauteils 20, bei dem zwar Beschädigungen bzw. Beeinträchtigungen der Funktion des Bauteils 20 vorhanden sind, der ordnungsgemäße Betrieb des Bauteils 20 jedoch weiterhin gewährleistet ist. Der Funktionszustand FZ mit dem Wert 1,0 kennzeichnet demgegenüber einen Zustand des Bauteils 20, bei dem dessen Funktion bzw. Funktionalität nicht mehr (zuverlässig) gewährleistet ist.

Der Zeitpunkt der Lebensdauer T_{L} kennzeichnet den Zeitpunkt, zu dem das Bauteil 20 dauerhaft geschädigt ist bzw. das Bauteil 20 nicht mehr funktionsfähig ist. Weiterhin ist ein Zeitpunkt tₒₙₛₑₜ eingezeichnet. Der Zeitpunkt tₒₙₛₑₜ dient der Unterteilung der Betriebsdauer t bzw. der Lebensdauer T_{L} des Bauteils 20 in zwei Phasen I und II.

Die erste Phase I ist gekennzeichnet durch einen Funktionszustand FZ des Bauteils 20, bei dem dieser zwischen 0 oder 0,5 beträgt, wobei der Funktionszustand FZ 0,5 lediglich zeitweise auftritt. Der Funktionszustand FZ wird durch statistische Auswertung der ersten Parameter P₂₂ bzw. P₂₄ berechnet, wobei die ersten Parameter P₂₂ bzw. P₂₄ ggf. unterschiedlich gewichtet werden.

Ab dem Zeitpunkt tₒₙₛₑₜ beginnt die zweite Phase II, da ab dem Zeitpunkt tₒₙₛₑₜ der (statistische) Funktionszustand FZ des Bauteils 20 mindestens 0,5 beträgt, der beispielhaft als erster Grenzwert GW₁ definiert wurde. Zwischen dem Zeitpunkt tₒₙₛₑₜ und dem Erreichen der Lebensdauer T_{L} beträgt der statistische Wert des Funktionszustands mehr als 0,5, jedoch weniger als 1,0. Gegen Ende der Lebensdauer T_{L} in der Phase II nimmt die Häufigkeit des Funktionszustands FZ mit dem Wert 1,0 zu und beträgt zum Zeitpunkt der Lebensdauer T_{L} konstant 1,0. Wie bereits oben erläutert, dient der Algorithmus 32 der Auswerteeinrichtung 30 dazu, die Lebensdauer T_{L} sowie die Nutzungsdauer T_{N} des Lagers 16 bzw. des Bauteils 20 zu berechnen. Dabei soll die Nutzungsdauer T_{N} derart bestimmbar sein, dass einerseits sicherstellt ist, dass das Bauteil 20 bis zum Ende der Nutzungsdauer T_{N} noch funktionsfähig ist, und andererseits die Lebensdauer T_{L} des Bauteils 20 möglichst optimal ausnutzt wird. Das hierzu vorgeschlagene Verfahren wendet hierzu wie im Zusammenhang mit den Erläuterungen zur Fig. 2 zwei zeitlich aufeinanderfolgende Phasen A und B an, wobei in der ersten Phase A entsprechend der Phase I vorzugsweise statistische Methoden, ersatzweise Methoden der künstlichen Intelligenz bzw. des maschinellen Lernens zur Anwendung kommen, um den Zeitpunkt tₒₙₛₑₜ zu bestimmen. Demgegenüber wird in der zweiten Phase B im Gegensatz zu den Erläuterungen zur Phase II der Fig. 2 ein physikalisches Modell PM auf wenigstens einen zweiten Parameter P₂ angewandt, um die Lebensdauer T_{L} des Bauteils 20 zu bestimmen und zusätzlich ein statistisches Verfahren zur Bestimmung der Nutzungsdauer T_{N} des Bauteils 20.

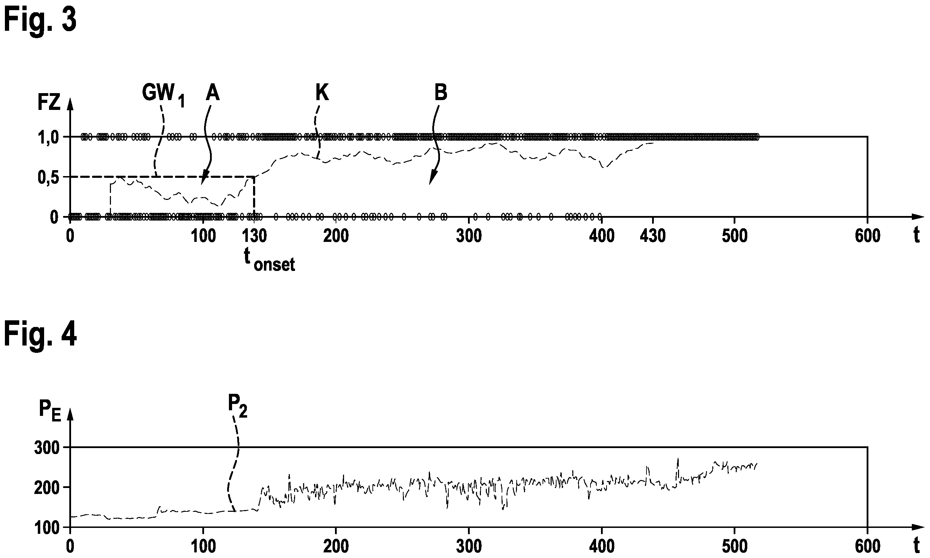

Zur Erläuterung des soweit erläuterten Verfahrens wird nunmehr auf die Diagramme in den Fig. 3 bis 6 eingegangen. In den Fig. 3 bis 6 bzw. den entsprechenden Diagrammen ist als x-Achse jeweils die Betriebsdauer t des Bauteils 20 dargestellt. In der Fig. 3 ist darüber hinaus der Funktionszustand FZ entsprechend den obigen Erläuterungen zur Fig. 2 als y-Achse dargestellt.

Die Kurve K in der Fig. 3 kennzeichnet das Ergebnis einer statistischen Auswertung der Funktionszustände FZ des Bauteils 20 auf Grundlage der von den beiden Sensoriken 22, 24 erfassten ersten Parameter P₂₂ und P₂₄. Der Einfachheit halber sind hier nur Funktionszustände FZ von 0,0 oder 1,0 durch entsprechende Rauten als Einzelereignisse eingezeichnet bzw. dargestellt. Je nach Bewertung bzw. Relevanz der einzelnen Parameter P₂₂ und P₂₄ können diese unterschiedlich gewichtet werden bzw. mittels statistischer Methoden (Mittelwertbildung, gleitender Mittelwert o.ä.) bearbeitet werden, um die Kurve K zu generieren.

Beispielsweise zum Zeitpunkt t = 130 ist die Phase A abgeschlossen bzw. der Zeitpunkt tₒₙₛₑₜ erreicht, da ab dem Zeitpunkt tₒₙₛₑₜ der Wert des Funktionszustands FZ den ersten Grenzwert GW₁ von 0,5 (stets) überschreitet. In der Fig. 3 ist darüber erkennbar, dass der Wert der Kurve K mit gewissen Schwankungen über die Betriebsdauer t größer wird, bis dieser beispielsweise zum Zeitpunkt von etwa 430 konstant 1,0 beträgt.

Während bis zum Zeitpunkt tₒₙₛₑₜ in der ersten Phase A die ersten Parameter P₂₂ und P₂₄ zur Bestimmung des Funktionszustands FZ des Bauteils 20 statistisch ausgewertet werden, beginnt in der zweiten Phase B eine Auswertung des wenigstens einen zweiten Parameters P₂ mittels des physikalischen Modells PM. Bei dem wenigstens einen zweiten Parameter P₂ kann es sich entweder um die gleichen Parameter handeln kann, die während der Phase A ausgewertet wurden, d.h. um wenigstens einen der ersten Parameter P₂₂ bzw. P₂₄, oder aber um einen anderen Parameter.

Die Anwendung des physikalischen Modells PM bzw. einer physikalischen Formel ermöglicht es, den Zeitpunkt der Lebensdauer T_{L} zu berechnen, zu dem der wenigstens eine zweite Parameter P₂ einen zweiten Grenzwert GW₂ erreicht, wobei der zweite Grenzwert GW₂ als der Wert des zweiten Parameters P₂ angesehen wird, an dem das Bauteil 20 nicht mehr funktionsfähig ist.

Weiterhin wird erläutert, dass die Höhe des zweiten Grenzwert GW₂ sich aus einer möglichen Beanspruchbarkeit des Bauteils 20 ergeben kann, während der wenigstens eine zweite Parameter P₂ ein Maß für eine Beanspruchung des Bauteils 20 darstellt. Beispielweise ist es bekannt, dass sich mit einer Schädigung eines Lagers 16 als Bauteil 20 sich zunehmend größer werdende Risse in der Lageroberfläche ergeben, bei deren Überrollen durch mit einer Welle verbundene Lagerkörper sich der Leistungsbedarf zum Drehen der Welle erhöht. Wenn man eine Rissgröße (entspricht einer Beanspruchbarkeit) kennt, die mit einem Lagerschaden gleichsetzbar ist, d.h. dass das Erreichen der Rissgröße dem Erreichen der Lebensdauer T_{L} des Bauteils 20 bzw. des Lager 16 entspricht, so kann eine Korrelation zwischen der Rissgröße (z.B. in µm) mit einem Leistungsbedarf (entspricht einer Beanspruchung) einer Welle (z.B. in W) hergestellt werden, oder mit anderen Worten gesagt kann eine Rissgröße in einen Leistungsbedarf umgerechnet werden.

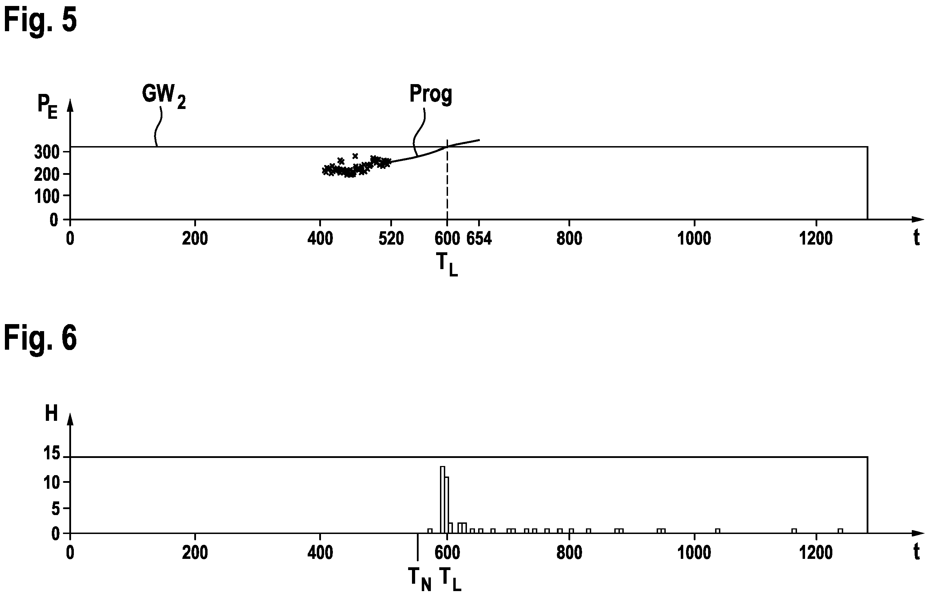

In der Fig. 4 ist beispielsweise die Leistungsaufnahme p_{E} des Elektromotors 12 über der Betriebsdauer t des Bauteils 20 dargestellt, auf die das physikalische Modell PM angewandt wird. Dabei erkennt man, dass die Leistungsaufnahme p_{E} über der Betriebsdauer t (konstante Bedingungen bzw. Drehzahlen usw. vorausgesetzt) sich im Laufe der Betriebsdauer t erhöht und zwar in ähnlicher Weise wie der Verlauf der Kurve K. Beispielhaft wird die Leistungsaufnahme p_{E} des Elektromotors 12 als zweiter Parameter P₂ erfasst und mittels des Algorithmus 32 ausgewertet. Als zweiter Grenzwert GW₂ wird ein Wert von 320 für den zweiten Parameter P₂ berechnet, der in der Fig. 5 als horizontale Linie eingezeichnet ist.

In der Fig. 5 sind darüber hinaus durch die Kreuze x zwischen den Zeitpunkten von etwas mehr als 490 und ca. 520 erfasste Messwerte der Leistungsaufnahme p_{E} des Elektromotors 12 dargestellt. Hierbei wird mit fortschreitender Betriebsdauer t des Elektromotors 12 bzw. des Bauteils 20 aufgrund des erfassten zweiten Parameters P₂ (Leistungsaufnahme p_{E}) jeweils eine (aktuelle) Kurve Prog auf Grundlage des physikalischen Modells PM berechnet. Man erkennt in der Fig. 5, dass die Kurve Prog den zweiten Grenzwert GW₂ zum Zeitpunkt von etwa 600 schneidet. Dies bedeutet, dass aufgrund der (fortlaufenden) Anwendung des physikalischen Modells PM und der letzten Messwerte der Leistungsaufnahme p_{E} des Elektromotors 12 (augenblicklich) davon ausgegangen wird, dass zum Zeitpunkt t von etwa 600 der zweite Grenzwert GW₂ erreicht und nachfolgend überschritten wird.

In der Fig. 6 ist über der Betriebsdauer t eine statistische Auswertung der Kurven Prog zu unterschiedlichen Zeitpunkten bzw. mit fortschreitender Betriebsdauer t dargestellt. Hierbei erkennt man, dass zum Zeitpunkt t von etwa 600 statistisch gesehen die größte Häufigkeit H auftritt, zu dem der zweite Grenzwert GW₂ erreicht wird, das heißt das Bauteil 20 seine Lebensdauer T_{L} erreicht. Da ein Anwender jedoch das Bauteil 20 mit Blick auf die Zuverlässigkeit des Betriebs der Vorrichtung 100 vorher austauschen bzw. reparieren sollte, wird mittels des Algorithmus 32 beispielsweise die Nutzungsdauer T_{N} des Bauteils 20 aufgrund von Vorgaben ermittelt, der genügend Abstand zur Lebensdauer T_{L} des Bauteils 20 aufweist bzw. mit hoher Wahrscheinlichkeit noch kein Schaden auftritt, der keinen Betrieb der Vorrichtung 10 mehr ermöglicht, d.h. insbesondere, dass die Häufigkeit H einen vorgegebenen Wert noch nicht erreicht hat.

Das soweit beschriebene Verfahren zur Abschätzung der Lebensdauer T_{L} sowie die Nutzungsdauer T_{N} des Bauteils 20 kann in vielfältiger Art und Weise abgewandelt bzw. modifiziert werden, ohne vom Erfindungsgedanken abzuweichen.

So wurde die Bewertung des Funktionszustands FZ des Bauteils 20 in der ersten Phase A insbesondere anhand statistischer Methoden bzw. Auswertungen erläutert. Im Rahmen der Erfindung sollen jedoch auch solche Methoden eingeschlossen sein, die auf Methoden der künstlichen Intelligenz bzw. des maschinellen Lernens beruhen.

## Patentansprüche

1. Verfahren zur Abschätzung der Lebensdauer (T_{L}) eines tribologisch beanspruchten Bauteils (20), umfassend zwei aufeinanderfolgende Phasen (I, II; A, B), wobei in einer ersten Phase (I; A), bei der beim Betrieb eines das Bauteil (20) aufweisenden Aggregats (10) wenigstens ein, vorzugsweise mehrere erste Parameter (P₂₂, P₂₄) des Bauteils (20) und/oder des Aggregats (10) zur Ermittlung eines Funktionszustands (FZ) des Bauteils (20) kontinuierlich oder in diskreten Zeitabständen erfasst wird, wobei beim Überschreiten eines ersten Grenzwerts (GW₁) des Funktionszustands (FZ) auf einen nicht ordnungsgemäßen Zustand des Bauteils (20) geschlossen wird, wobei der Funktionszustand (FZ) auf Grundlage einer statistischen Auswertung oder einer Methode der künstlichen Intelligenz bzw. des maschinellen Lernens des wenigstens einen ersten Parameters (P₂₂, P₂₄) ermittelt wird, wobei ab dem Erreichen des ersten Grenzwerts (GW₁) die erste Phase (I; A) abgeschlossen und in die zweite Phase (II; B) übergeleitet wird, in der wenigstens ein zweiter Parameter (P₂) des Bauteils (20) und/oder des Aggregats (10) kontinuierlich oder in diskreten Zeitabständen erfasst wird, wobei der wenigstens eine zweite Parameter (P₂) anhand eines physikalischen Modells (PM) hinsichtlich eines zweiten Grenzwerts (GW₂) ausgewertet wird, und wobei beim Erreichen des zweiten Grenzwerts (GW₂) auf das Ende der Lebensdauer (T_{L}) des Bauteils (20) geschlossen wird.

2. Verfahren nach Anspruch 1,
**dadurch gekennzeichnet,**
**dass** zur Berechnung einer Nutzungsdauer (T_{N}) des Bauteils (20) die Zeitpunkte des Erreichens des zweiten Grenzwerts (GW₂) statistisch ausgewertet werden und die Nutzungsdauer (T_{N}) vorzugsweise derart gewählt wird, dass die Häufigkeit (H) der Zeitpunkte des Erreichens des zweiten Grenzwerts (GW₂) unter einem vorgegebenen Wert liegen.

3. Verfahren nach Anspruch 1 oder 2,
**dadurch gekennzeichnet,**
**dass** während der ersten Phase (I; A) mehrere erste Parameter (P₂₂, P₂₄) ausgewertet werden und dass die mehreren ersten Parameter (P₂₂, P₂₄) aufgrund unterschiedlicher Relevanz unterschiedlich zueinander gewichtet werden.

4. Verfahren nach einem der Ansprüche 1 bis 3,
**dadurch gekennzeichnet,**
**dass** die Ergebnisse des Funktionszustands (FZ) während der ersten Phase (I; A) mittels statistischer Methoden bewertet werden.

5. Verfahren nach einem der Ansprüche 1 bis 4,
**dadurch gekennzeichnet,**
**dass** der wenigstens eine zweite Parameter (P₂) zumindest mittelbar eine Beanspruchung des Bauteils (20) und der zweite Grenzwert (GW₂) ein Maß für eine mögliche Beanspruchbarkeit des Bauteils (20) repräsentiert.

6. Verfahren nach Anspruch 5,
**dadurch gekennzeichnet,**
**dass** der wenigstens eine zweite Parameter (P₂) und der zweite Grenzwert (GW₂) in einen Bezug zueinander gebracht werden, derart, dass von einem Wert des wenigstens einen zweiten Parameters (P₂) auf einen Wert in Bezug auf den zweiten Grenzwert (GW₂) geschlossen wird.

7. Verfahren nach einem der Ansprüche 1 bis 6,
**dadurch gekennzeichnet,**
**dass** vor dem Erreichen einer prognostizierten Lebensdauer (T_{L}) des Bauteils (20) ein Signal, eine Mitteilung o.ä. generiert wird, um einen Hinweis auf einen Austausch und/oder eine Reparatur des Bauteils (20) zu erzeugen.

8. Verfahren nach einem der Ansprüche 1 bis 7,
**dadurch gekennzeichnet,**
**dass** das Verfahren als selbstlernendes Verfahren durchgeführt wird.

9. Vorrichtung (100) zur Abschätzung der Lebensdauer (T_{L}) eines tribologisch beanspruchten Bauteils (20), umfassend ein Aggregat (10) mit dem tribologisch beanspruchten Bauteil (20), einer Sensorik (22, 24) zur Erfassung wenigstens eines ersten und wenigstens eines zweiten Parameters (P₂₂, P₂₄, P₂), und einer einen Algorithmus (32) aufweisenden Auswerteeinrichtung (30) zur Durchführung der eines Verfahrens nach einem der Ansprüche 1 bis 8.

10. Computerprogrammprodukt, insbesondere Datenträger oder Datenprogramm, mit einem Algorithmus, der dazu ausgebildet ist, wenigstens einen Schritt eines Verfahrens nach einem der Ansprüche 1 bis 8 auszuführen oder als Bestandteil einer Vorrichtung nach Anspruch 9 dient.
